# FASCICULE DE BREVET EUROPEEN

(11) **EP 4 013 672 B1**
(45) Date de publication et mention de la délivrance du brevet: **10.01.2024**
(21) Numéro de dépôt: 20753370.4
(22) Date de dépôt: 12.08.2020
(51) Int. Cl.: B62M 6/55, B62M 11/14, B62K 19/34, B62K 19/44, B62K 25/00

(54) **SYSTÈME DE PROPULSION POUR VÉHICULE À ASSISTANCE ÉLECTRIQUE**
ANTRIEBSSYSTEM FÜR ELEKTRISCH UNTERSTÜTZTES FAHRZEUG
ELECTRICALLY-ASSISTED VEHICLE PROPULSION SYSTEM

(30) Priorité: 16.08.2019 BE 201905533
(43) Date de publication de la demande: 22.06.2022
(73) Titulaire: E2 Drives, 1300 Wavre (BE)
(72) Inventeur: DELEVAL, Arthur, 3090 Overijse (BE)
(74) Mandataire: Gevers Patents
(86) Numéro de dépôt international: PCT/EP2020/072563
(87) Numéro de publication internationale: WO 2021/032548

(56) Documents cités:
- WO-A1-2016/034574
- WO-A1-2019/158503
- WO-A1-2019/166402
- BE-A1- 1 026 017
- BE-A1- 1 026 057

## Description

### Domaine technique

La présente invention concerne un système de propulsion pour véhicule à pédales, en particulier pour vélo ou vélo électrique. Le système de propulsion comprend un groupe motopropulseur et un système de transmission pour transférer de la puissance vers la roue arrière du véhicule.

### Art antérieur

Le document WO2019043123 décrit un groupe motopropulseur pour vélo. Ce groupe motopropulseur comprend un train épicycloïdal, un axe de pédalier, un plateau de sortie, un premier moteur et un deuxième moteur. Le train épicycloïdal comprend une couronne, un planétaire et un porte-satellite. En outre, le document WO2016/034574, qui montre toutes les caractéristiques du préambule de la revendication indépendante 1, décrit un autre groupe motopropulseur pour vélo connu.

Dans ce groupe motopropulseur, un étage de réduction est présent entre la sortie du train planétaire et le plateau de sortie du groupe motopropulseur. Cet étage de réduction génère des pertes de transmission. De plus, il ajoute du poids et de l'encombrement au groupe motopropulseur. En outre, dans ce groupe motopropulseur, la puissance est transmise depuis le plateau de sortie jusqu'au pignon de roue arrière à travers une chaine ou une courroie apparente. Cette chaine ou courroie est exposée à l'encrassement ce qui réduit la durée de vie de la transmission et augmente son entretien. De plus, le passage de cette chaine ou courroie à proximité de la jambe du cycliste peut s'avérer salissante et/ou dangereuse.

### Résumé de l'invention

Un des buts de l'invention est de fournir un système de propulsion pour véhicule à pédales, intégrant un groupe motopropulseur et le système de transmission vers la roue arrière, simple de fabrication, offrant un excellent niveau de sécurité, léger, robuste, de faible encombrement et de rendement particulièrement élevé.

A cet effet, l'invention propose, un système de propulsion pour un véhicule à pédales et comprenant:
- un premier élément de transmission déformable agencé pour entrainer une roue arrière du véhicule à pédales;
- un groupe motopropulseur comprenant :
   - un axe de pédalier agencé de façon à tourner autour d'un premier axe de rotation,
   - un plateau de sortie principal agencé pour entrainer le premier élément de transmission déformable,
   - un premier moteur,
   - un deuxième moteur,
   - un train épicycloïdal comprenant un premier élément d'entrée, un élément de sortie et un planétaire,
      l'axe de pédalier et le deuxième moteur étant reliés au train épicycloïdal via le premier élément d'entrée de façon à former une première entrée du train épicycloïdal,
      le premier moteur étant relié au train épicycloïdal via le planétaire de façon à former une deuxième entrée du train épicycloïdal,
      l'élément de sortie reliant le train épicycloïdal au plateau de sortie principal de façon à former une sortie du train épicycloïdal, et
      le premier élément de transmission déformable étant agencé pour transmettre de la puissance entre le groupe motopropulseur et la roue arrière du véhicule à pédales ;
- un ensemble carter ;
- un pignon arrière (24) ;
- le plateau de sortie principal, le premier élément d'entrée, l'élément de sortie et le planétaire étant agencés de façon à tourner autour d'un même deuxième axe de rotation différent du premier axe de rotation ; caractérisé en ce que
- le groupe motopropulseur comprend :
   - un plateau de sortie secondaire agencé pour tourner autour du premier axe de rotation et engrené sur le premier élément de transmission déformable,
   - un système de démultiplication de vitesse conservant le sens de rotation pour transmettre une rotation entre l'axe de pédalier et le premier élément d'entrée ; et
- le premier élément de transmission déformable, une partie de l'axe de pédalier, le plateau de sortie principal, le premier moteur, le deuxième moteur, le train épicycloïdal, le plateau de sortie secondaire, et le pignon arrière sont à l'intérieur de l'ensemble carter.

Dans le groupe motopropulseur selon l'invention, le plateau de sortie principal, le premier élément d'entrée, l'élément de sortie et le planétaire ont un axe de rotation décalé spatialement de l'axe de rotation de l'axe du pédalier. Cela permet que la taille du planétaire soit indépendante du diamètre de l'axe du pédalier. Cela permet alors d'installer un planétaire de plus petit diamètre et donc d'augmenter la raison du train épicycloïdal. Il est donc possible d'obtenir une raison suffisante pour le train épicycloïdal sans utiliser de satellites doubles. Cela permet que le groupe motopropulseur soit plus facile à fabriquer, à monter et revienne moins cher.

Le groupe motopropulseur selon l'invention permet aussi d'obtenir un grand rapport de réduction entre le premier moteur et le plateau de sortie. En effet, ce rapport de réduction dépend de la raison du train épicycloïdal, du rapport de démultiplication entre l'axe de pédalier et la première entrée du train épicycloïdal ainsi que du rapport du nombre de dents entre le plateau de sortie secondaire et principal.

L'ensemble carter protégeant le premier élément de transmission déformable à proximité de la manivelle droite permet d'éviter que le passage de celui-ci entre le plateau de sortie principal et le plateau de sortie secondaire ne heurte la jambe du cycliste ou ses vêtements. En outre, il permet de dissimuler les deux plateaux de sortie, qui ne sont pas conventionnels sur les vélos et risquent de perturber l'utilisateur. En outre, puisque l'ensemble carter enferme la transmission du pédalier jusqu'à la roue arrière, il permet une sécurité et une propreté particulièrement grandes.

Un ensemble carter enfermant le premier élément de transmission déformable, tel que celui de l'invention, ne serait pas possible avec un véhicule comprenant un dérailleur. En effet, un dérailleur crée de grands déplacements verticaux du premier élément de transmission déformable, qui sont incompatibles avec un ensemble carter de taille raisonnable. Par conséquent, le groupe motopropulseur selon l'invention, qui permet de changer les vitesses sans utiliser de dérailleur, est particulièrement en adéquation avec l'ensemble carter selon l'invention.

L'ensemble carter entoure les éléments assurant la transmission du couple depuis le plateau de sortie principal et/ou le plateau de sortie secondaire jusqu'au pignon de roue arrière, entrainant à son tour la roue arrière. Par exemple, le plateau de sortie principal, le plateau de sortie secondaire, le pignon de roue arrière, ainsi que la chaine ou la courroie de transmission sont enfermés dans un premier carter, qui forme un ensemble carter avec un ou plusieurs autres carter(s) entourant le groupe motopropulseur.

L'enfermement du système de propulsion, en particulier des plateaux de sortie et du premier élément de transmission déformable, offre un double avantage. Premièrement, il permet de protéger les pièces intérieures à l'ensemble carte de l'encrassement et de l'humidité, afin d'augmenter significativement la durée de vie et réduire ou complètement supprimer l'entretien de la transmission. Dans le cas d'une transmission par chaine, cela permet de garder la graisse à l'intérieur pour conserver la lubrification de la chaine. Deuxièmement, il permet de protéger le cycliste de blessures ou de tâche causées par le contact d'une pièce de la transmission avec celui-ci.

Un autre avantage est que le système propulsion est regroupé en un seul boitier démontable du reste du véhicule. Cet ensemble regroupe l'essentiel de la partie technique, et donc l'essentiel de la valeur du véhicule électrique. En cas de panne, il est possible de l'enlever facilement et de le remplacer par un nouveau.

« L'ensemble carter » forme une enveloppe du système de propulsion. Il comprend préférentiellement plusieurs carters, notamment le carter de transmission qui enferme le premier élément de transmission déformable et le carter moteur qui enferme le groupe motopropulseur. Le carter de transmission peut comprendre plusieurs carters. Le carter moteur peut comprendre plusieurs carters. Le carter de transmission peut comprendre un boitier et un couvercle fermant le boitier. Le boitier est de préférence situé entre la roue arrière et le couvercle.

Les carters compris dans l'ensemble carter sont préférentiellement moulés en alliage léger (aluminium ou magnésium par exemple) et s'assemblent par exemple à l'aide de vis. L'ensemble carter permet notamment de guider les différents axes de rotation, notamment l'axe de pédalier, les axes des deux moteurs et l'axe de roue arrière. L'ensemble carter assure également l'étanchéité du système. L'ensemble carter comprend des ouvertures, notamment une ou deux ouverture(s) pour faire passer l'axe de pédalier et deux ouvertures pour faire passer l'axe de la roue arrière.

Comme l'axe du pédalier est différent de l'axe du premier élément d'entrée, il y a une première démultiplication entre le pédalier et le premier élément d'entrée. Cela permet de réduire le couple dans le train épicycloïdal tout en augmentant sa vitesse de rotation. Par conséquent, les exigences de robustesse du train épicycloïdal sont diminuées et un train épicycloïdal plus léger est possible. En outre, la rotation plus rapide des éléments du train épicycloïdal permet qu'il soit compatible avec des moteurs de plus petite taille, qui typiquement tourne plus vite et avec moins de couple que des moteurs plus grands.

Le plateau de sortie secondaire peut également transmettre une partie de la puissance si le couple instantané sur le pédalier dépasse un certain seuil et que le premier moteur sature à son couple maximal. Pendant la durée de cette poussée sur la pédale, la valeur instantanée du rapport de vitesse du groupe motopropulseur diminue, et par exemple si le rapport de vitesse programmé est faible, il se peut que la première roue libre se mette en action et entraine le plateau de sortie secondaire qui transmet alors le couple excédentaire du cycliste au premier élément de transmission déformable. Lorsque cela se produit, ce qui peut arriver lorsque l'assistance est activée, le premier élément de transmission déformable reçoit de la puissance d'une part via le train épicycloïdal et le plateau de sortie principal et d'autre part via le plateau de sortie secondaire. La présence du plateau de sortie secondaire et de la première roue libre empêche ainsi le rapport de vitesse du groupe motopropulseur d'être inférieure à un.

Le système de propulsion décrit dans le présent document est notamment prévu pour que le groupe motopropulseur soit celui décrit dans le document PCT/EP2019/053386.

Dans le cadre du présent document, un élément de transmission déformable peut être notamment une chaine, une courroie ou une bande flexible. Si c'est une courroie, elle préférentiellement faite dans un matériau souple et est préférentiellement dentée ou crantée sur sa surface intérieure.

Il est intéressant de noter que le groupe motopropulseur a un mode de fonctionnement, qui peut être appelé « mode de fonctionnement normal », dans lequel l'entièreté de la puissance, ce qui équivaut à la somme des puissances des deux moteurs et de la puissance du cycliste est fournie au plateau de sortie principal. Ce plateau de sortie principal transmet la puissance via le premier élément de transmission déformable à la roue arrière. Ce mode de fonctionnement est celui le plus souvent utilisé par les cyclistes utilisant un vélo électrique.

Dans le groupe motopropulseur selon l'invention, une transmission par un système de démultiplication de vitesse conservant le sens de rotation existe entre l'axe de pédalier et la première entrée du train épicycloïdal. Ce système de démultiplication de vitesse permet une démultiplication de la vitesse angulaire, ce qui est particulièrement intéressant car la vitesse du pédalier est beaucoup plus faible que celle d'un moteur électrique.

Dans le cadre du présent document, le sens normal de pédalage est le sens de rotation de l'axe du pédalier qui correspond à un mouvement vers l'avant du véhicule à pédales.

Dans le cadre du présent document, un « plateau de sortie » est un plateau de sortie du groupe motopropulseur et qui est prévu pour entrainer le premier élément de transmission déformable.

Les différentes caractéristiques du groupe motopropulseur selon l'invention permettent que les éléments de celui-ci aient des rapports de réduction/démultiplication mécanique particulièrement grands tout en gardant un nombre d'étages de transmission relativement petit. Ainsi, le groupe motopropulseur fournit un excellent rendement tout en gardant une taille et un poids faibles.

Un faible nombre d'étages de transmission permet d'optimiser le rendement de transmission. En outre, cela permet de diminuer le jeu de transmission entre les éléments du groupe motopropulseur, ce qui peut améliorer la précision du contrôle du groupe motopropulseur. Cette précision de contrôle est notamment particulièrement utile si le premier moteur est contrôlé en vitesse sur base de la vitesse du deuxième moteur.

Un avantage du groupe motopropulseur est qu'il permet de placer une démultiplication entre l'axe du pédalier et le premier élément d'entrée du train épicycloïdal. Tous les éléments du train épicycloïdal tournent donc plus vite et avec moins de couple. Cela diminue les contraintes mécaniques qu'ils subissent. Un autre avantage du groupe motopropulseur selon l'invention est qu'il fournit un rapport de transmission variable de façon continue.

Préférentiellement, le groupe motopropulseur comprend une unité de contrôle permettant de contrôler le premier et le deuxième moteurs.

Le fait que l'axe du pédalier et le plateau de sortie secondaire aient le même axe de rotation permet que l'axe de pédalier ne soit pas dans le chemin du premier élément de transmission déformable qui permet de relier le plateau de sortie principal à la roue arrière.

Dans le cadre du présent document, deux éléments connectés ou reliés peuvent être connectés ou reliés directement ou indirectement. Ils peuvent, par exemple, être engrenés directement ou indirectement via au moins une roue dentée intermédiaire, une courroie et/ou un galet.

Dans le cadre du présent document, les termes « entrée » et « sortie » doivent être compris dans le sens d'une entrée et d'une sortie dans une chaine cinématique. Une entrée est préférentiellement une entrée en puissance mécanique et une sortie est préférentiellement une sortie en puissance mécanique.

Dans le cadre du présent document, un véhicule à pédales peut par exemple être un vélo, un vélomoteur, un tricycle.

Dans le cadre du présent document, « le rapport de vitesse du groupe motopropulseur » est définit comme étant le rapport entre la vitesse du plateau de sortie secondaire et la vitesse de l'axe du pédalier. Il peut aussi être appelé « paramètre de rapport de vitesses ». C'est un paramètre qui peut être commandé manuellement par le cycliste via une interface de contrôle ou calculé automatiquement par l'unité de contrôle en fonction d'autres paramètres.

Dans le cadre du présent document, un élément "agencé de façon à tourner autour d'un axe de rotation" est préférentiellement un élément essentiellement symétrique autour de cet axe.

Dans le cadre du présent document, un "rapport fixe" entre deux objets signifie que leurs vitesses de rotation sont dans un rapport constant.

Dans le cadre du présent document, le« niveau d'assistance du groupe motopropulseur » désigne la portion de puissance donnée par l'assistance électrique par rapport à la puissance donnée par le cycliste. Il peut être calculé comme étant la puissance de l'ensemble des deux moteurs divisée par la somme de la puissance de l'ensemble des deux moteurs et de la puissance du cycliste. Il peut aussi être appelé « paramètre de niveau d'assistance ». C'est un paramètre qui peut être commandé manuellement par le cycliste via une interface de contrôle ou calculé automatiquement par l'unité de contrôle en fonction d'autres paramètres.

Dans le cadre du présent document, une mesure de position angulaire est équivalente à une mesure de vitesse angulaire. En effet, le groupe motopropulseur selon l'invention comprend préférentiellement un moyen pour déterminer la vitesse angulaire d'un des moteurs à partir de la position angulaire de ce moteur.

Dans le cadre du présent document, une mesure de courant est équivalente à une mesure de couple. En effet, le groupe motopropulseur selon l'invention comprend préférentiellement un moyen pour déterminer le couple d'un des moteurs à partir du courant fourni à ce moteur.

Le train épicycloïdal comprend une couronne, un porte-satellite et un planétaire.

La transmission entre l'axe du pédalier et le premier élément d'entrée se fait via un mécanisme de transmission tel que le premier élément d'entrée tourne dans le même sens que l'axe de pédalier.

Préférentiellement, le plateau de sortie principal et le plateau de sortie secondaire sont reliés à la roue arrière du véhicule à pédales par l'intermédiaire d'une chaine de transmission de sortie ou d'une courroie de transmission de sortie.

La rotation de l'axe du pédalier provient du mouvement de pédalage d'un cycliste utilisant le véhicule à pédales. L'utilisation d'un train épicycloïdal prenant en entrée l'axe du pédalier permet un changement du rapport de vitesse entre la rotation de l'axe de pédalier et la rotation du plateau de sortie principal, ainsi que la rotation du plateau de sortie secondaire.

Préférentiellement, le contrôle des moteurs est un contrôle avec retour d'information, aussi appelé contrôle en boucle fermée (feed back control en anglais).

Le groupe motopropulseur selon l'invention peut fonctionner en frein à rétropédalage, ce qui permet de récupérer l'énergie de freinage pour recharger la batterie. Préférentiellement, le groupe motopropulseur est alors agencé de façon à ce que la roue arrière soit capable d'entrainer le premier élément de transmission déformable pour transmettre le mouvement sur le plateau de sortie principal. Cela peut par exemple se faire en installant le pignon de la roue arrière de manière fixe sur un moyeu de la roue arrière. Par conséquent, si le véhicule à pédale descend une pente, le premier élément de transmission déformable tourne en entrainant le plateau de sortie principal. Cela aura pour conséquence de faire tourner le premier moteur et/ou le deuxième moteur. Il suffit d'appliquer une consigne de couple négative au premier et/ou au deuxième moteur afin de freiner le véhicule et récupérer une partie de l'énergie pour recharger la batterie. La commande de ce frein moteur peut se faire de plusieurs manières. Ce frein moteur pourrait par exemple être actionné par le cycliste via une commande au guidon, via le/les levier(s) de frein ou via le rétropédalage des manivelles.

Dans un mode de réalisation de l'invention, le système de propulsion comprend en outre un galet tendeur agencé pour tendre le premier élément de transmission déformable, et qui est préférentiellement situé à l'intérieur de l'ensemble carter.

Dans un mode de réalisation de l'invention, l'ensemble carter comprend un carter de transmission qui enferme le premier élément de transmission déformable, le carter de transmission étant agencé pour être situé d'un seul côté de la roue arrière.

Ainsi, l'ensemble carter comprend un mono-bras. En particulier, le carter de transmission peut former un mono-bras. Le mono-bras est préférentiellement situé du côté droit de la roue. Le mono-bras permet de démonter le pneu du vélo (en cas de crevaison), sans démonter la roue arrière. Préférentiellement, le mono-bras est composé de deux parties moulées en alliage léger (par exemple aluminium ou alliage de magnésium) qui s'assemblent par des vis de fixation. Le moulage permet d'obtenir des coques à parois fines et nervurées afin d'obtenir un mono-bras résistant et léger. Cela permet aussi de réduire le cout de fabrication à grande échelle. Un autre avantage du moulage est qu'il permet d'intégrer de nombreuses fonctions dans le même moule, telles que des points de fixation pour un système de freinage, une béquille, un garde-boue, un porte-bagage, ou un attache-remorque.

Le mono-bras peut-être par exemple fixé de manière fixe sur le cadre du vélo, ou par l'intermédiaire d'un amortisseur. Il peut être connecté via un pivot sur le cadre, en particulier s'il est fixé sur le cadre par l'intermédiaire d'un amortisseur.

Dans un mode de réalisation de l'invention, l'ensemble carter est agencé pour assurer seul la fixation mécanique entre la roue arrière et un cadre du véhicule à pédales. En particulier, le carter de transmission est préférentiellement agencé pour assurer seul la fixation mécanique entre la roue arrière et un cadre du véhicule à pédales.

En d'autres termes, le carter de transmission est autoportant dans le sens où il permet, à lui seul, d'assurer le couplage mécanique entre la roue arrière et cadre du véhicule à pédales. Ainsi, le carter de transmission forme la structure arrière du véhicule, guidant notamment l'axe de roue arrière. Cela offre l'avantage de réduire la taille du cadre du véhicule.

Dans un mode de réalisation de l'invention, le deuxième moteur est connecté au premier élément d'entrée du train épicycloïdal via un troisième élément de transmission déformable, préférentiellement une courroie crantée.

Ce troisième élément de transmission déformable forme de préférence l'ensemble de cette connexion mécanique. Cela permet qu'il n'y ait qu'un seul étage de réduction, et de conserver le sens de rotation entre l'axe du deuxième moteur et le premier élément d'entrée. Cela permet de réduire le jeu de transmission, améliorant ainsi la qualité du contrôle en vitesse du premier moteur. Cela permet aussi d'augmenter la distance d'entraxe entre l'axe du deuxième moteur et l'axe du premier moteur sans modifier le rapport de réduction et sans augmenter l'encombrement radial des éléments de transmission, et de ce fait cela permet d'avoir plus de place pour l'installation du deuxième moteur côte à côte avec le premier moteur.

Dans un mode de réalisation de l'invention, le système de propulsion comprend en outre un capteur arrière agencé pour mesurer la vitesse de la roue arrière et situé à l'intérieur de l'ensemble carter. Préférentiellement, le capteur arrière est agencé pour détecter un passage d'un élément agencé pour tourner avec la roue arrière.

Ce capteur sert à mesurer la vitesse du vélo quand le pédalier est à l'arrêt et que le vélo roule en roue libre. De préférence, un capteur équipé d'un aimant et de capteur à effet Hall est utilisé pour détecter le passage des branches ferromagnétiques du disque de frein, augmentant ainsi la robustesse du système ainsi que la bande passante du signal. En effet, cette solution évite de placer un aimant sur une partie tournante de la roue.

Dans un mode de réalisation de l'invention, le plateau de sortie principal est solidaire de l'élément de sortie. La solidarisation du plateau de sortie principal avec l'élément de sortie permet que la sortie du train épicycloïdal entraine le plateau de sortie principal sans réduction de vitesse. Cela permet un assemblage particulièrement aisé du groupe motopropulseur, et le rend particulièrement léger et peu volumineux. De plus, cela permet d'obtenir un rendement particulièrement élevé.

Dans un mode de réalisation de l'invention, le système de propulsion comprend en outre une première roue libre agencée pour empêcher le plateau de sortie secondaire de tourner moins vite que l'axe de pédalier lorsque l'axe de pédalier tourne dans le sens normal de pédalage.

La première roue libre est préférentiellement située à l'intérieur de l'ensemble carter. La première roue libre est agencée pour permettre une transmission de puissance mécanique depuis l'axe de pédalier vers le plateau de sortie secondaire. La première roue libre est disposée, préférentiellement directement, entre l'axe de pédalier et le plateau de sortie secondaire. En position bloquée, l'axe de pédalier entraine directement le plateau de sortie secondaire. En position libre, le plateau de sortie secondaire peut tourner plus vite que l'axe de pédalier. Cette position de la roue libre permet d'atteindre un premier rapport de vitesse du groupe motopropulseur particulièrement faible.

En outre, la première roue libre permet que, sous certaines conditions, l'axe de pédalier entraine directement le plateau de sortie secondaire, qui lui-même entraine le premier élément de transmission déformable qui entraine la roue arrière. Toute la puissance du pédalage est alors directement transmise au premier élément de transmission déformable via le plateau de sortie secondaire. Le reste du système de propulsion, dont le train épicycloïdal, n'est donc pas chargé, ce qui permet un haut rendement mécanique. Cela se produit par exemple si le système électrique du groupe motopropulseur est mis hors tension ou si l'assistance est désactivée et que le plus petit rapport de vitesse du groupe motopropulseur est sélectionné.

Dans un mode de réalisation de l'invention, le groupe motopropulseur comprend en outre une deuxième roue libre agencée pour empêcher un entrainement de l'axe de pédalier par le deuxième moteur dans un direction de rotation correspondant à un mouvement vers l'avant du véhicule à pédales.

Dans un mode de réalisation de l'invention, le groupe motopropulseur comprend en outre une roue libre de roue arrière agencée pour empêcher le pignon arrière de tourner plus vite que la roue arrière quand l'axe de pédalier tourne dans le sens normal de pédalage qui correspond à un mouvement vers l'avant du véhicule à pédales.

Dans un mode de réalisation de l'invention, le plateau de sortie principal est plus petit que le plateau de sortie secondaire.

Dans un mode de réalisation de l'invention, le pignon arrière est plus petit que le plateau de sortie secondaire et plus grand que le plateau de sortie principal.

Dans un premier mode de réalisation de l'invention, le premier élément d'entrée est une couronne du train épicycloïdal et l'élément de sortie est un porte-satellite du train épicycloïdal.

Selon un exemple préféré de ce mode de réalisation, l'axe du pédalier est relié, avec un rapport fixe, à la couronne; le rotor du deuxième moteur est relié, avec un rapport fixe, à la couronne; le rotor du premier moteur est relié, avec un rapport fixe, au planétaire; la couronne forme la première entrée du train épicycloïdal et le planétaire forme la deuxième entrée du train épicycloïdal; le porte-satellite forme une sortie du train épicycloïdal; le porte-satellite est solidaire du plateau de sortie principal. Plus préférentiellement, le rotor du premier moteur est solidaire du planétaire.

Dans un deuxième mode de réalisation de l'invention, le premier élément d'entrée est un porte-satellite du train épicycloïdal et l'élément de sortie est une couronne du train épicycloïdal.

Dans un deuxième mode de réalisation de l'invention, l'axe de pédalier et le premier élément d'entrée sont reliés de façon à ce que le premier élément d'entrée tourne plus vite que l'axe de pédalier.

Préférentiellement, le système de démultiplication de vitesse conservant le sens de rotation comprend un deuxième élément de transmission déformable, par exemple une chaine ou une courroie. L'utilisation d'un deuxième élément de transmission déformable permet aussi de diminuer les jeux de transmission par rapport à l'utilisation d'engrenages.

En outre, l'utilisation d'un deuxième élément de transmission déformable pour démultiplier la vitesse de l'axe du pédalier jusqu'à la première entrée du train épicycloïdal permet d'obtenir un écart particulièrement grand entre l'axe de pédalier et l'axe du train épicycloïdal. Il est ainsi possible d'augmenter la taille de la couronne du train épicycloïdal pour en augmenter sa raison. Le but d'augmenter la raison du train épicycloïdal et d'augmenter la vitesse des deux moteurs électriques et d'ainsi diminuer la taille de ces moteurs. Cela réduit le poids et le volume du groupe motopropulseur. De cette manière, il est possible de réduire le diamètre des deux moteurs électriques, ce qui permet de les positionner tous les deux du même côté du groupe motopropulseur. Le deuxième élément de transmission déformable permet d'isoler le pédalier des vibrations pouvant venir des moteurs électriques ou de la transmission. Elle amortit ainsi les vibrations ressenties par le cycliste dans les pieds, améliorant ainsi son confort.

Préférentiellement, le premier moteur est solidaire du planétaire. Préférentiellement, le premier moteur et le deuxième moteur sont situés d'un même côté du train épicycloïdal. Cette conception permet de diminuer le volume du groupe motopropulseur et de faciliter l'assemblage car les deux moteurs sont ainsi proches d'une même carte électronique à laquelle ils peuvent être tous les deux connectés. Préférentiellement, les moteurs sont situés du côté du groupe motopropulseur opposé à celui des plateaux de sortie.

Préférentiellement, le groupe motopropulseur comprend en outre :
- un élément de mesure de position angulaire du premier moteur,
- un élément de mesure de position angulaire du deuxième moteur,
- un élément de mesure de courant du premier moteur,
- un élément de mesure de courant du deuxième moteur,
- une unité de contrôle connectée au premier moteur, au deuxième moteur, et agencée pour contrôler le premier moteur et le deuxième moteur sur base de la position angulaire du premier moteur, de la position angulaire du deuxième moteur, du courant du premier moteur et du courant du deuxième moteur, l'unité de contrôle étant agencée pour contrôler le deuxième moteur selon un contrôle en courant ou en couple et pour contrôler le premier moteur selon un contrôle en position angulaire ou en vitesse angulaire.

Préférentiellement, le premier moteur a pour rôle de gérer le rapport de vitesse du groupe motopropulseur. Une de ses fonctions est d'offrir un rapport de transmission donné. Ce rapport de transmission est le rapport entre la vitesse angulaire de l'axe du pédalier et la vitesse angulaire du plateau de sortie secondaire. Ce rapport de transmission peut par exemple être déterminé sur base d'un paramètre de rapport de vitesses fourni par l'utilisateur du véhicule à pédales ou déterminé par l'unité de contrôle afin d'offrir un changement de vitesse automatique au cycliste. Cette détermination peut notamment être calculée sur base d'un paramètre de cadence de pédalage, défini par l'utilisateur. Le premier moteur est préférentiellement contrôlé en position angulaire ou en vitesse angulaire, par exemple via l'unité de contrôle qui contrôle le premier moteur de telle sorte qu'une consigne de position angulaire ou de vitesse angulaire soit respectée.

Préférentiellement, le deuxième moteur a pour rôle de gérer le bon niveau d'assistance du groupe motopropulseur. Une de ses fonctions est d'assister le mouvement du cycliste en ajoutant du couple sur le pédalier. Préférentiellement, le niveau d'assistance est déterminé par l'unité de contrôle sur base notamment d'un paramètre de niveau d'assistance. Le paramètre de niveau d'assistance peut être déterminé par l'utilisateur ou de façon automatique par l'unité de contrôle du groupe motopropulseur. Il est préféré que le niveau d'assistance soit indépendant du rapport de vitesse du groupe motopropulseur. Le deuxième moteur est préférentiellement contrôlé en courant ou en couple, par exemple via l'unité de contrôle qui contrôle le deuxième moteur de telle sorte qu'une consigne de courant ou de couple soit respectée.

Préférentiellement, l'unité de contrôle est connectée électriquement à l'élément de mesure d'une position angulaire du premier moteur, à l'élément de mesure d'une position angulaire du deuxième moteur, à l'élément de mesure d'un courant du premier moteur, et à l'élément de mesure d'un courant du deuxième moteur.

Il est intéressant de noter qu'il n'y a pas de différence fondamentale entre un contrôle en position et un contrôle en vitesse car il existe un lien mathématique direct entre les deux valeurs. La vitesse angulaire est la dérivée temporelle de la position angulaire. Par exemple, contrôler un moteur pour qu'il tourne à une vitesse angulaire constante revient à contrôler un moteur pour qu'il suive une position angulaire évoluant linéairement en fonction du temps.

L'invention propose en outre une méthode de fabrication comprenant un assemblage d'un système de propulsion tel que décrit dans le présente document, et une méthode d'utilisation d'un système de propulsion tel que décrit dans le présente document.

L'invention propose en outre un véhicule à pédales comprenant un système de propulsion selon l'un quelconque des modes de réalisation de l'invention, un cadre, et une roue arrière.

Dans un mode de réalisation de l'invention, la connexion mécanique entre la roue arrière et le groupe motopropulseur ne passe que d'un seul côté de la roue arrière et comprend le système de propulsion. En d'autres termes, le véhicule à pédales est de type monobras. En effet, un côté de la roue arrière est libre de toute connexion mécanique entre le cadre et l'axe de roue arrière.

Dans un mode de réalisation de l'invention, le véhicule à pédales comprend en outre un élément agencé pour tourner avec la roue arrière et être détecté par un capteur arrière agencé pour mesurer la vitesse de la roue arrière et situé à l'intérieur de l'ensemble carter.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre une vue tridimensionnelle d'un véhicule équipé d'un système de propulsion dans lequel le carter de transmission forme un mono-bras auto-portant;
- la figure 2 illustre une coupe schématique d'une première variante du premier mode de réalisation de l'invention ;
- la figure 3 illustre une coupe schématique d'une deuxième variante du premier mode de réalisation de l'invention ;
- la figure 4 illustre très schématiquement une chaine cinématique interne d'un groupe motopropulseur selon un mode de réalisation de l'invention ;
- la figure 5 illustre une vue latérale du système de transmission intégré dans un carter de transmission selon un mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. Dans le contexte du présent document, les termes « premier » et « deuxième » servent uniquement à différencier les différents éléments et n'impliquent pas d'ordre entre ces éléments. Sur les figures, les éléments identiques ou analogues peuvent porter les mêmes références.

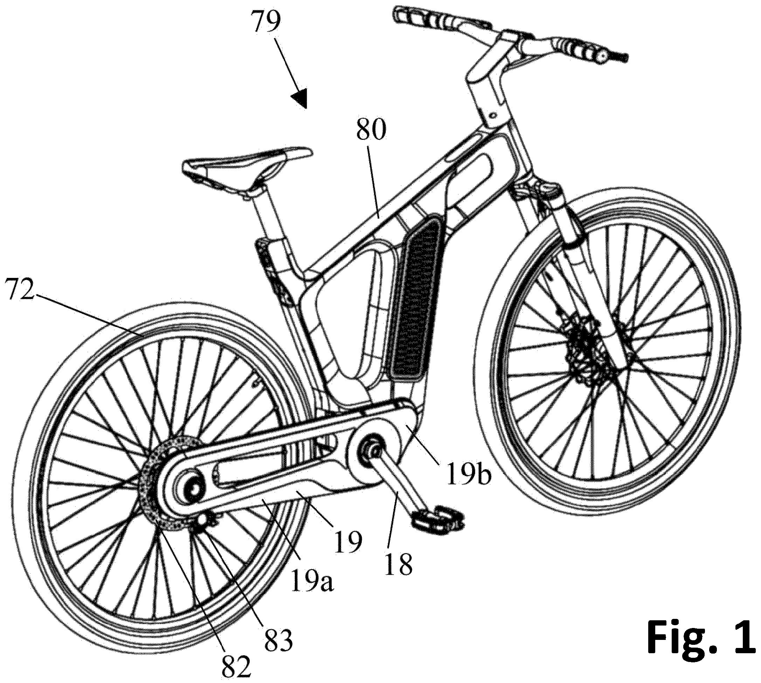

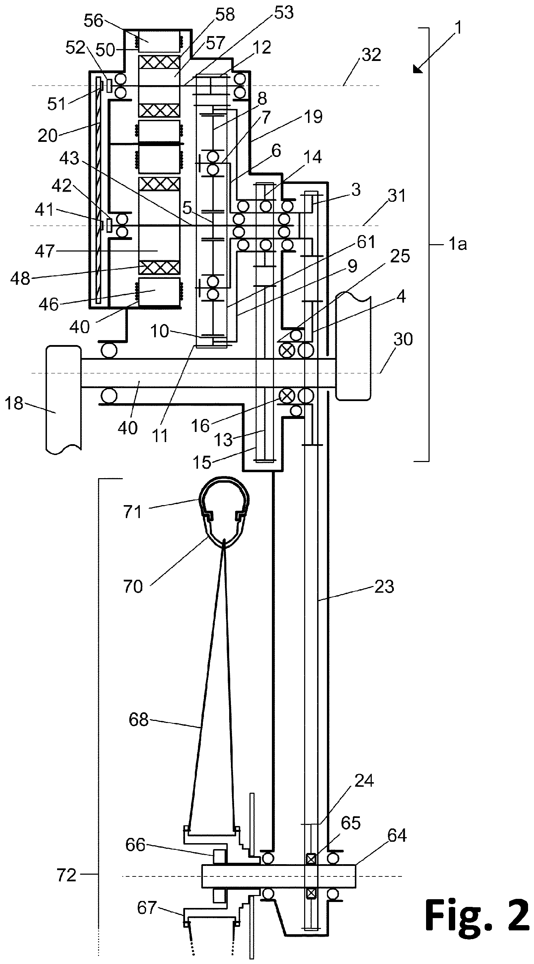

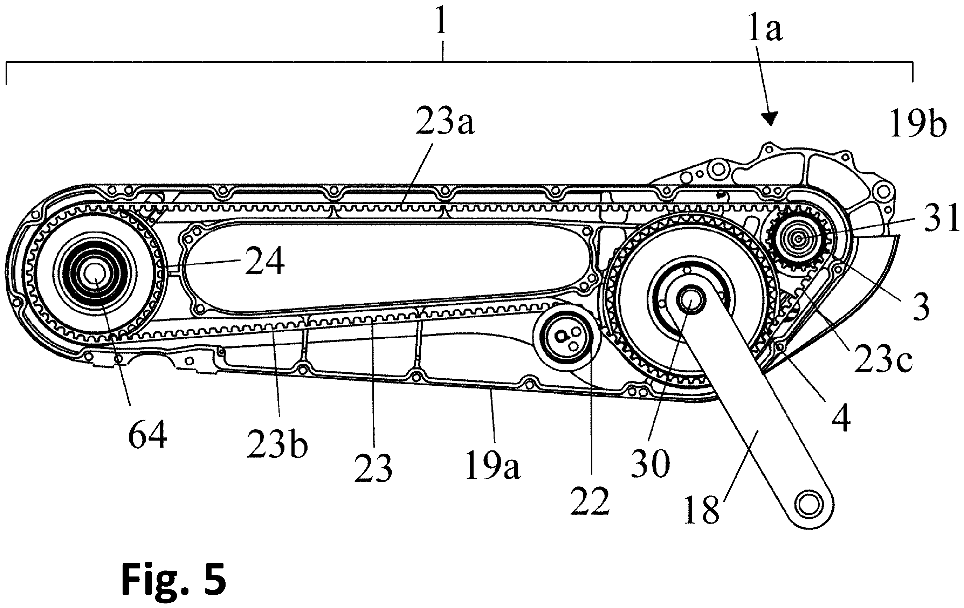

La figure 1 illustre une vue tridimensionnelle d'un véhicule 79 équipé d'un système de propulsion selon un mode de réalisation de l'invention. Le véhicule 79 comprend un cadre 80, auquel est fixé le système de propulsion 1. Le système de propulsion 1 comprend un groupe motopropulseur 1a et un premier élément de transmission déformable 23 (visible aux figures 2 à 4) enfermés dans un ensemble carter 19. L'ensemble carter 19 comprend de préférence un carter moteur 19b et un carter de transmission 19a (visibles figure 5). Dans le mode de réalisation illustré, le carter de transmission forme un mono-bras. Il est autoportant et assure la fixation de la roue arrière 72 au cadre 80. La figure 1 illustre aussi une manivelle 18, un disque de frein 82 et un étrier de frein 83

La figure 2 illustre une coupe schématique d'une première variante du premier mode de réalisation de l'invention.

Le groupe motopropulseur 1a comprend un axe de pédalier 2 et un plateau de sortie secondaire 4 de même axe de rotation. Cet axe peut être appelé premier axe de rotation 30. Préférentiellement, l'axe de pédalier 2 est fixé à deux manivelles 18. Préférentiellement, le groupe motopropulseur 1a comprend un ensemble carter 19, formant un enveloppe entourant le premier élément de transmission déformable 23 et le groupe motopropulseur 1a, excepté les extrémités de l'axe de pédalier 2. Le premier élément de transmission déformable 23 assure la transmission de couple depuis le premier 3 et/ou le deuxième plateau de sortie 4 jusqu'au pignon de roue arrière 24.

Le groupe motopropulseur 1a comprend un plateau de sortie principal 3 fixé au porte-satellite 6, préférentiellement à une extrémité du porte-satellite 6, de façon à tourner avec le porte-satellite 6.

Le groupe motopropulseur 1a comprend également un plateau de sortie secondaire 4, fixé sur un arbre creux de sortie secondaire 25 traversant la paroi latérale de l'ensemble carter 19. L'arbre creux de sortie secondaire 25 est monté sur roulement autour de l'axe de pédalier 2. Une première roue libre 16 est installée entre l'axe de pédalier 2 et l'arbre creux de sortie secondaire 25 de manière à ce que le plateau de sortie secondaire 4 ne puisse pas tourner moins vite que l'axe de pédalier 2 lorsque l'axe de pédalier 2 est actionné dans le sens normal de pédalage.

Le groupe motopropulseur 1a comprend un premier moteur 40 et un deuxième moteur 50. Le premier moteur 40 comprend un stator 46 et un rotor 47 qui comprend préférentiellement des aimants 48. Le rotor 47 est agencé pour tourner autour d'un deuxième axe de rotation 31. Le couple du rotor 47 est transmis par l'axe du rotor 43 à un planétaire 5. Le deuxième moteur 50 comprend un stator 56 et un rotor 57 qui comprend préférentiellement des aimants 58. Le rotor 57 est agencé pour tourner autour d'un troisième axe de rotation 32. Le couple du rotor 57 est transmis par l'axe du rotor 53 à une troisième poulie 12.

Une fonction de la première roue libre 16 est de permettre une transmission de puissance purement mécanique depuis l'axe de pédalier 2 vers le premier élément de transmission déformable 23, même si les moteurs 40, 50 ne sont pas alimentés. En position bloquée, la roue libre 16 rend l'axe de pédalier 2 solidaire du plateau de sortie secondaire 4. En position libre, le plateau de sortie 4 est libre de tourner plus vite que l'axe de pédalier 2 lorsque l'axe de pédalier 2 est actionné dans le sens normal de pédalage.

Le groupe motopropulseur 1a comprend préférentiellement un élément de mesure de courant du premier moteur 40 et un élément de mesure de courant du deuxième moteur 50. Le groupe motopropulseur 1a comprend en outre préférentiellement une unité de contrôle, préférentiellement fixée à une carte de circuit imprimé 20. La carte de circuit imprimé 20 est préférentiellement située perpendiculairement aux deuxième 31 et au troisième 32 axes de rotation.

Préférentiellement, un premier aimant de mesure 42 est fixé à une extrémité d'un arbre 43 du premier moteur 40 et un deuxième aimant de mesure 52 est fixé à une extrémité d'un arbre 53 du deuxième moteur 50. Préférentiellement, un premier capteur 41 est fixé à la carte de circuit imprimé 20, approximativement dans l'axe du deuxième axe de rotation 31. Le premier capteur 41 et le premier aimant de mesure 42 font partie d'un élément de mesure de position angulaire du rotor 47 du premier moteur 40. Préférentiellement, un deuxième capteur 51 est fixé à la carte de circuit imprimé 20, approximativement dans l'axe du troisième axe de rotation 32. Le deuxième capteur 51 et le deuxième aimant de mesure 52 font partie d'un élément de mesure de position angulaire du rotor 57 du deuxième moteur 50.

L'unité de contrôle contrôle le premier moteur 40 et le deuxième moteur 50 sur base de la position angulaire du premier moteur 40, de la position angulaire du deuxième moteur 50, du courant du premier moteur 40 et du courant du deuxième moteur 50, ces informations lui ayant été fournies par les éléments de mesures. L'unité de contrôle contrôle le deuxième moteur 50 en courant ou en couple. L'unité de contrôle contrôle le premier moteur 40 en position angulaire ou en vitesse angulaire.

Le groupe motopropulseur 1a comprend un train épicycloïdal qui comprend un premier élément d'entrée, un élément de sortie et le planétaire 5.

Le groupe motopropulseur 1a comprend en outre un deuxième élément de transmission déformable 15, par exemple une chaine ou une courroie, permettant de transmettre une rotation entre l'axe de pédalier 2 et le premier élément d'entrée. Ce deuxième élément de transmission déformable 15 forme un système de démultiplication de vitesse conservant le sens de rotation.

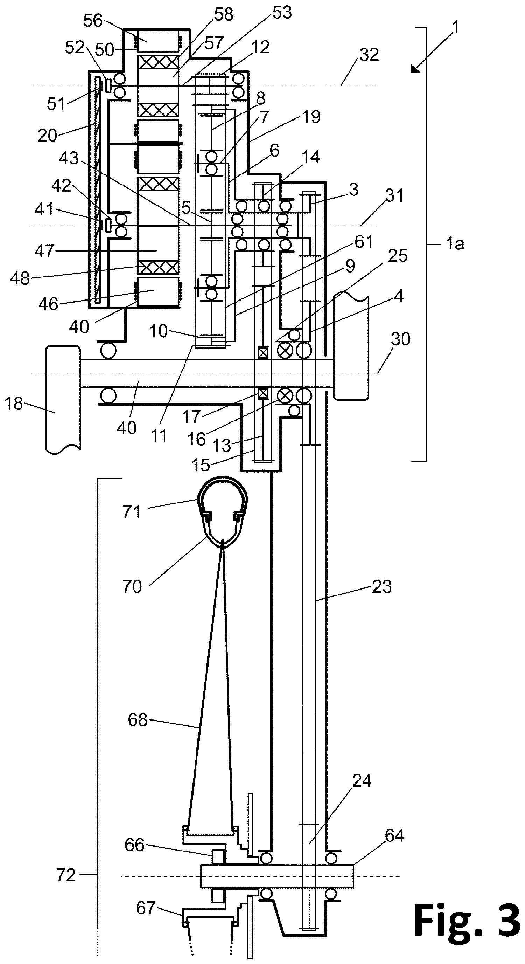

Dans le premier mode de réalisation de l'invention, qui est celui illustré aux figures 2 et 3, le premier élément d'entrée est une couronne 9 et l'élément de sortie est un porte-satellite 6. Préférentiellement, le porte-satellite 6 comprend au moins un satellite 8 agencé pour tourner autour d'un axe de satellite 7. Préférentiellement, la couronne 9 est engrenée sur au moins un satellite 8 via sa denture interne 10. Préférentiellement, le planétaire 5 est engrené sur le au moins un satellite 8.

Dans un mode de réalisation de l'invention, une première poulie 13 est solidaire de l'axe de pédalier 2. La première poulie 13 est reliée à une deuxième poulie 14 par le deuxième élément de transmission déformable 15. La deuxième poulie 14 est solidaire de la couronne 9. Préférentiellement, la première poulie 13 a un diamètre supérieur à celui de la deuxième poulie 14 afin d'augmenter la vitesse de rotation par rapport à celle de l'axe de pédalier 2. Par exemple le diamètre de la première poulie 13 peut être entre 1,5 et 3 fois plus grand que celui de la deuxième poulie 14.

En mode de fonctionnement normal, le groupe motopropulseur 1a selon le premier mode de réalisation de l'invention fonctionne de la façon suivante. L'axe de pédalier 2 et le deuxième moteur 50 entrainent la couronne 9, l'entrainement entre l'axe de pédalier 2 et la couronne 9 passant par le deuxième élément de transmission déformable 15. La couronne 9 est une première entrée du train épicycloïdal. Le premier moteur 40 entraine le planétaire 5, qui est une deuxième entrée du train épicycloïdal. La couronne 9 et le planétaire 5 entrainent le porte-satellite 6, qui est une sortie du train épicycloïdal. Le porte-satellite 6 entraine le plateau de sortie principal 3. La vitesse de rotation du plateau de sortie principal sera égale à une somme pondérée de la vitesse de rotation de la couronne 9 et de la vitesse de rotation du planétaire 5. En augmentant la vitesse de rotation du planétaire 5, il est donc possible d'augmenter la vitesse du plateau de sortie principal 3, en gardant une vitesse de rotation constante au niveau de l'axe de pédalier 2. Il s'agit donc bien d'une transmission continuellement variable (CVT).

Le système de propulsion 1 comprend en outre un troisième élément de transmission déformable 61, par exemple une chaine ou une courroie, permettant de transmettre une rotation entre la troisième poulie 12, qui est solidaire du rotor 57 du deuxième moteur 50, et une denture externe 11 de la couronne 9. Ce troisième élément de transmission déformable 61 forme un système de démultiplication de vitesse conservant le sens de rotation. La troisième poulie 12 a un diamètre inférieur à celui de la couronne 9, le but étant de diminuer la vitesse de rotation par rapport à celle du moteur.

Le planétaire 5 est solidaire du rotor 47 du premier moteur 40 de façon à tourner avec ce rotor 47. Le porte-satellite 6 est solidaire du plateau de sortie principal 3.

Le premier élément de transmission déformable 23 est logé dans le carter de transmission 19a. La puissance de sortie du groupe motopropulseur 1a est transmise via le premier élément de transmission déformable 23 jusqu'à un pignon arrière 24. Le pignon arrière 24 transmet le couple à un axe de roue arrière 64 par l'intermédiaire d'une roue libre de roue arrière 65. Cette roue libre 65 est positionnée de manière à ce que le pignon arrière 24 ne puisse pas tourner plus vite que la roue arrière 72 quand l'axe de pédalier 2 tourne dans le sens normal de pédalage. Elle est agencée pour transmettre le couple du pignon de roue arrière à la roue arrière quand le pédalier est actionné dans son sens normal. Cette roue libre 24 a pour rôle de permettre au cycliste d'avancer sans pédaler, par exemple en descente. Un moyeu 67 de la roue arrière 72 est fixé de manière solidaire sur l'axe de roue arrière 64 grâce à un écrou 66. Le moyeu 67 transmet le couple au pneu arrière 71 via les rayons 68 et la jante 70.

La première roue libre 16 empêche le plateau de sortie secondaire 4 de tourner moins vite que l'axe de pédalier 2 quand l'axe de pédalier 2 tourne dans le sens normal de pédalage. Le but de cette roue libre 16 est que rapport de vitesse du groupe motopropulseur 1a ne puisse être inférieure à 1 :1.

La figure 3 illustre une variante du groupe motopropulseur 1a dans lequel une deuxième roue libre 17 est installée entre l'axe de pédalier 2 et la première poulie 13. Cette roue libre 17 a pour fonction d'empêcher le deuxième moteur 50 d'entrainer l'axe de pédalier 2 lorsque l'axe de pédalier 2 est actionné dans le sens normal de pédalage.

La deuxième roue libre 17 entraine la première poulie 13 lorsque l'axe de pédalier 2 est actionné dans le sens normal de pédalage, mais la première poulie 13 ne peut pas entrainer l'axe de pédalier 2 lorsque l'axe de pédalier 2 est actionné dans le sens normal de pédalage.

La variante de la figure 3 illustre un montage de roue arrière qui ne contient pas de roue libre de roue arrière 65. Dans cette variante, le pignon de roue arrière 24 est monté de manière solidaire à l'axe de roue arrière 64. Cela permet notamment d'utiliser le groupe motopropulseur 1a pour freiner le véhicule 79. En effet, l'énergie cinétique peut être transmise depuis la roue arrière 72 jusqu'au plateau de sortie principal 3, de manière à entrainer le premier moteur 40 et/ou le deuxième moteur 50. Le ou les moteurs sont ainsi pilotés en frein pour recharger la batterie. Ce frein moteur peut par exemple être activé par une commande manuelle au guidon, ou par le rétropédalage. Il est intéressant de noter que l'entrainement de la roue arrière ne fera pas tourner le pédalier durant le frein moteur, grâce à la présence de la deuxième roue libre 17.

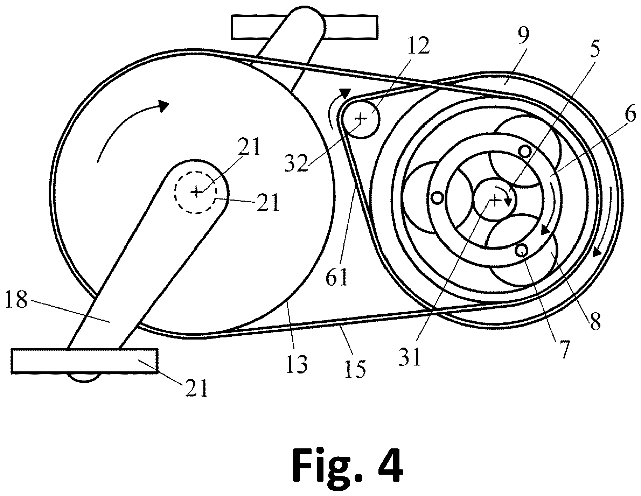

La figure 4 illustre très schématiquement une chaine cinématique interne d'un groupe motopropulseur 1a selon un mode de réalisation de l'invention. Selon cette chaine cinématique, le cycliste fournit une puissance en entrée du système via des pédales 21, entrainant l'axe de pédalier 2 via les manivelles 18. La première poulie 13, solidaire de l'axe de pédalier 2 entraine, via le deuxième élément de transmission déformable 15, la couronne 9, de manière à ce que cette dernière tourne plus vite que l'axe de pédalier 2. La troisième poulie 12, solidaire du rotor 57 du deuxième moteur (non représenté sur ce schéma simplifié), entraine, via un troisième élément de transmission déformable 61 la denture externe 11 de la couronne 9, de manière à ce que cette dernière tourne moins vite que la troisième poulie 12. La couronne 9 constitue la première entrée du train épicycloïdal. Le planétaire 5, solidaire du rotor 47 du premier moteur (non représenté sur ce schéma simplifié), constitue la deuxième entrée du train épicycloïdal. Le planétaire 5 et la couronne 9 sont connectés ensemble par le biais du porte-satellite 6 comprenant au moins un satellite 8. Le ou les satellites 8 sont maintenus, libres en rotation, par des axes 7 du porte-satellite 6. Le porte-satellite 6 constitue la sortie du train épicycloïdal.

Les flèches de la figure 4 montrent le sens de rotation des différents organes en fonctionnement normal du groupe motopropulseur 1a. Par souci de simplification et de visibilité du schéma représenté à la figure 4, les différents organes de transmission (roue, pignon, courroie) apparaissent lisses et peuvent faire penser à une transmission par frottement. Cela n'écarte évidemment pas l'utilisation de dentures pour en faire des roues dentées ou des courroies crantées.

La figure 5 illustre une vue latérale du système de propulsion 1 selon un mode de réalisation de l'invention. Dans cette vue, le couvercle du carter de transmission 19a a été volontairement masqué pour faire apparaitre la transmission interne.

La figure 5 illustre un groupe motopropulseur 1a, un premier élément de transmission déformable 23, un pignon 24 de roue arrière et un galet tendeur 22. Le premier élément de transmission déformable 23 comprend un brin supérieur 23a, un brin inférieur 23b et un brin intermédiaire 23c. Le brin intermédiaire 23c est la partie du premier élément de transmission déformable 23 se trouvant entre le plateau de sortie principal 3 et le plateau de sortie secondaire 4.

Le rôle du galet tendeur 22 est d'appliquer le bon niveau de pré-tension dans le premier élément de transmission déformable 23, afin que celui-ci ne soit pas trop détendu, une fois mis sous haute charge. Le galet tendeur 22 peut être monté fixe ou monté par l'intermédiaire d'un ressort (non représenté sur la figure 5) afin de reprendre le mou du premier élément de transmission déformable 23 quand la transmission est mise sous charge. Il permet que le brin intermédiaire 23c reste tendu. Ce galet tendeur 22 peut être intégré dans l'ensemble carter 19 du groupe motopropulseur 1a. Il est placé de façon à être en contact avec le brin inférieur 23b. Il est également possible d'envisager un fonctionnement fixe sans galet tendeur 22.

Dans le mode de fonctionnement normal du groupe motopropulseur 1a, le plateau de sortie principal 3 entraine le premier élément de transmission déformable 23. Le plateau de sortie secondaire 4, étant préférentiellement engrené sur le même premier élément de transmission déformable 23 que le plateau de sortie principal 3, tourne à vide à une vitesse plus élevée que l'axe de pédalier 2. Le plateau de sortie secondaire 4 est désolidarisé de l'axe de pédalier 2 par l'intermédiaire de la première roue libre 16.

Dans certains modes de fonctionnement particuliers, différents du mode de fonction normal du groupe motopropulseur 1a, la première roue libre 16 se bloque et empêche le plateau de sortie secondaire 4 de tourner moins vite que l'axe du pédalier 2. Dans ce cas, le plateau de sortie secondaire 4 entraine, en tout ou en partie, le premier élément de transmission déformable 23, et donc également le plateau de sortie principal 3. Si le système électrique est mis hors-tension et/ou si l'assistance est désactivée et que le plus petit rapport de vitesse du groupe motopropulseur 1a est sélectionné (soit par l'utilisateur soit par le système de contrôle), toute la puissance du cycliste est alors transmise au premier élément de transmission déformable 23 via le plateau de sortie secondaire 4. Le reste de la transmission n'est donc pas chargé et la transmission est à haut rendement mécanique.

De préférence, le plateau de sortie principal 3 est plus petit que le plateau de sortie secondaire 4. De préférence, le pignon arrière 24 est plus petit que le plateau de sortie secondaire 4 et plus grand que le plateau de sortie principal 3.

Il est intéressant de noter que l'agencement du groupe motopropulseur 1a selon l'invention est compatible avec les variantes de groupes motopropulseur décrites dans le document WO2013/160477 ou dans le document WO2016/034574 ou avec d'autres variantes de groupes motopropulseurs connus.

En d'autres termes, l'invention se rapporte à un système de propulsion 1 pour véhicule à pédales. Le système de propulsion 1 comprend un groupe motopropulseur 1a permettant de combiner la puissance provenant d'un axe de pédalier 2 et de deux moteurs 40, 50, un premier élément de transmission déformable 23 permettant la transmission de puissance vers la roue arrière 73 et un ensemble carter 19 enfermant notamment le premier élément de transmission déformable 23 et le groupe motopropulseur 1a, à l'exception d'une partie de l'axe de pédalier.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Système de propulsion (1) pour un véhicule à pédales et comprenant:
- un premier élément de transmission déformable (23) agencé pour entrainer une roue arrière (72) du véhicule à pédales;
- un groupe motopropulseur (1a) comprenant :
• un axe de pédalier (2) agencé de façon à tourner autour d'un premier axe de rotation (30),
• un plateau de sortie principal (3) agencé pour entrainer le premier élément de transmission déformable (23),
• un premier moteur (40),
• un deuxième moteur (50),
• un train épicycloïdal comprenant un premier élément d'entrée, un élément de sortie et un planétaire (5),
l'axe de pédalier (2) et le deuxième moteur (50) étant reliés au train épicycloïdal via le premier élément d'entrée de façon à former une première entrée du train épicycloïdal,
le premier moteur (40) étant relié au train épicycloïdal via le planétaire (5) de façon à former une deuxième entrée du train épicycloïdal,
l'élément de sortie reliant le train épicycloïdal au plateau de sortie principal (3) de façon à former une sortie du train épicycloïdal, et
le premier élément de transmission déformable (23) étant agencé pour transmettre de la puissance entre le groupe motopropulseur et la roue arrière (72) du véhicule à pédales; et
- un ensemble carter (19) ;
- un pignon arrière (24) ;
- le plateau de sortie principal (3), le premier élément d'entrée, l'élément de sortie et le planétaire (5) étant agencés de façon à tourner autour d'un même deuxième axe de rotation (31) différent du premier axe de rotation (30) ; **caractérisé en ce que**
- le groupe motopropulseur (1a) comprend :
• un plateau de sortie secondaire (4) agencé pour tourner autour du premier axe de rotation (30) et engrené sur le premier élément de transmission déformable (23),
• un système de démultiplication de vitesse conservant le sens de rotation pour transmettre une rotation entre l'axe de pédalier (2) et le premier élément d'entrée ; et
- le premier élément de transmission déformable (23), une partie de l'axe de pédalier (2), le plateau de sortie principal (3), le premier moteur (40), le deuxième moteur (50), le train épicycloïdal, le plateau de sortie secondaire (4), et le pignon arrière (24) sont à l'intérieur de l'ensemble carter (19).

2. Système de propulsion (1) selon la revendication 1, comprenant en outre un galet tendeur (22) agencé pour tendre le premier élément de transmission déformable (23).

3. Système de propulsion (1) selon l'une quelconque des revendications précédentes, dans lequel l'ensemble carter comprend un carter de transmission (19a) qui enferme le premier élément de transmission déformable (23), le carter de transmission (19a) étant agencé pour être situé d'un seul côté de la roue arrière (72).

4. Système de propulsion (1) selon l'une quelconque des revendications précédentes, dans lequel l'ensemble carter (19) est agencé pour assurer seul la fixation mécanique entre la roue arrière (72) et un cadre (80) du véhicule à pédales.

5. Système de propulsion (1) selon l'une quelconque des revendications précédentes, dans lequel le deuxième moteur (50) est connecté au premier élément d'entrée du train épicycloïdal via un troisième élément de transmission déformable (61).

6. Système de propulsion (1) selon l'une quelconque des revendications précédentes, comprenant en outre un capteur arrière agencé pour mesurer la vitesse de la roue arrière et situé à l'intérieur de l'ensemble carter (19).

7. Système de propulsion (1) selon l'une quelconque des revendications précédentes, dans lequel le plateau de sortie principal (3) est solidaire de l'élément de sortie.

8. Système de propulsion (1) selon l'une quelconque des revendications précédentes, comprenant en outre une première roue libre (16) agencée pour empêcher le plateau de sortie secondaire (4) de tourner moins vite que l'axe de pédalier (2) lorsque l'axe de pédalier (2) tourne dans le sens normal de pédalage.

9. Système de propulsion (1) selon l'une quelconque des revendications précédentes, dans lequel le groupe motopropulseur (1a) comprend en outre une deuxième roue libre (17) agencée pour empêcher un entrainement de l'axe de pédalier (2) par le deuxième moteur (50) dans un direction de rotation correspondant à un mouvement vers l'avant du véhicule à pédales.

10. Système de propulsion (1) selon l'une quelconque des revendications 1 à 8, dans lequel le groupe motopropulseur (1a) comprend en outre une roue libre de roue arrière (65) agencée pour empêcher le pignon arrière (24) de tourner plus vite que la roue arrière (72) quand l'axe de pédalier (2) tourne dans le sens normal de pédalage qui correspond à un mouvement vers l'avant du véhicule à pédales.

11. Système de propulsion (1) selon l'une quelconque des revendications précédentes, dans lequel le premier élément d'entrée est une couronne (9) du train épicycloïdal et l'élément de sortie est un porte-satellite (6) du train épicycloïdal.

12. Système de propulsion (1) selon l'une quelconque des revendications 1 à 10, dans lequel le premier élément d'entrée est un porte-satellite (6) du train épicycloïdal et l'élément de sortie est une couronne (9) du train épicycloïdal.

13. Système de propulsion (1) selon l'une quelconque des revendications précédentes, dans lequel le premier moteur (40) est solidaire du planétaire.

14. Véhicule à pédales comprenant un système de propulsion (1) selon l'une quelconque des revendications précédentes, un cadre (80), et une roue arrière (72).

15. Véhicule à pédales selon la revendication précédente, dans lequel la connexion mécanique entre la roue arrière (72) et le groupe motopropulseur (1a) ne passe que d'un seul côté de la roue arrière (72) et comprend le système de propulsion (1).

## Patentansprüche

1. Antriebssystem (1) für ein Tretfahrzeug und umfassend:
- ein erstes verformbares Übertragungselement (23), angeordnet zum Antreiben eines hinteren Rads (72) des Tretfahrzeugs;
- einen Antriebsstrang (1a), umfassend:
- eine Tretlagerwelle (2), die so angeordnet ist, dass sie sich um eine erste Drehachse (30) dreht,
- eine primäre Abtriebsscheibe (3), die so angeordnet ist, dass sie das erste verformbare Übertragungselement (23) antreibt,
- einen ersten Motor (40),
- einen zweiten Motor (50),
- ein Planetengetriebe, umfassend ein erstes Antriebselement, ein Abtriebselement und ein Sonnenrad (5),
wobei die Tretlagerwelle (2) und der zweite Motor (50) mit dem Planetengetriebe über das erste Antriebselement verbunden sind, um einen ersten Eingang des Planetengetriebes zu bilden,
wobei der erste Motor (40) über das Sonnenrad (5) mit dem Planetengetriebe verbunden ist, um einen zweiten Eingang des Planetengetriebes zu bilden,
wobei das Abtriebselement das Planetengetriebe mit der primären Abtriebsscheibe (3) verbindet, um einen Ausgang des Planetengetriebes zu bilden, und
wobei das erste verformbare Übertragungselement (23) angeordnet ist, um die Leistung zwischen dem Antriebsstrang und dem hinteren Rad (72) des Tretfahrzeugs zu übertragen; und
- eine Gehäusebaugruppe (19);
- ein hinteres Zahnrad (24);
- die primäre Abtriebsscheibe (3), das erste Antriebselement, das Abtriebselement und das Sonnenrad (5) derart angeordnet sind, dass sie sich um dieselbe zweite Drehachse (31) drehen, die sich von der ersten Drehachse (30) unterscheidet; **dadurch gekennzeichnet, dass**
- der Antriebsstrang (1a) umfasst:
- eine sekundäre Abtriebsscheibe (4), die so angeordnet ist, dass sie sich um die erste Drehachse (30) dreht und mit dem ersten verformbaren Übertragungselement (23) im Eingriff ist,
- ein Untersetzungsgetriebe, das die Drehrichtung beibehält, um eine Drehung zwischen der Tretlagerwelle (2) und dem ersten Antriebselement zu übertragen; und
- ein erstes verformbares Übertragungselement (23), ein Teil der Tretlagerwelle (2), die primäre Abtriebsscheibe (3), der erste Motor (40), der zweite Motor (50), das Planetengetriebe, die sekundäre Abtriebsscheibe (4) und das hintere Zahnrad (24) im Inneren der Gehäusebaugruppe (19) vorliegen.

2. Antriebssystem (1) nach Anspruch 1, weiter umfassend eine Spannrolle (22), die so angeordnet ist, dass sie das erste verformbare Übertragungselement (23) spannt.

3. Antriebssystem (1) nach einem der vorstehenden Ansprüche, wobei die Gehäusebaugruppe ein Getriebegehäuse (19a) umfasst, das das erste verformbare Übertragungselement (23) umschließt, wobei das Getriebegehäuse (19a) angeordnet ist, um sich auf einer einzigen Seite des hinteren Rads (72) zu befinden.

4. Antriebssystem (1) nach einem der vorstehenden Ansprüche, wobei die Gehäusebaugruppe (19) angeordnet ist, um einzig die mechanische Befestigung zwischen dem hinteren Rad (72) und einem Rahmen (80) des Tretfahrzeugs sicherzustellen.

5. Antriebssystem (1) nach einem der vorstehenden Ansprüche, wobei der zweite Motor (50) mit dem ersten Antriebselement des Planetengetriebes mittels eines dritten verformbaren Übertragungselements (61) verbunden ist.

6. Antriebssystem (1) nach einem der vorstehenden Ansprüche, weiter umfassend einen hinteren Sensor, angeordnet, um die Geschwindigkeit des hinteren Rads zu messen, und sich im Inneren der Gehäusebaugruppe (19) befindend.

7. Antriebssystem (1) nach einem der vorstehenden Ansprüche, wobei die primäre Abtriebsscheibe (3) mit dem Abtriebselement einstückig ist.

8. Antriebssystem (1) nach einem der vorstehenden Ansprüche, weiter umfassend einen ersten Freilauf (16), der so angeordnet ist, dass er verhindert, dass sich die sekundäre Abtriebsscheibe (4) weniger schnell dreht als die Tretlagerwelle (2), wenn sich die Tretlagerwelle (2) in die normale Tretrichtung dreht.

9. Antriebssystem (1) nach einem der vorstehenden Ansprüche, wobei der Antriebsstrang (1a) weiter einen zweiten Freilauf (17) umfasst, der so angeordnet ist, dass er einen Antrieb der Tretlagerwelle (2) durch den zweiten Motor (50) in einer Drehrichtung verhindert, die einer Bewegung des Tretfahrzeugs nach vorne entspricht.

10. Antriebssystem (1) nach einem der Ansprüche 1 bis 8, wobei der Antriebsstrang (1a) weiter einen Freilauf des hinteren Rads (65) umfasst, der so angeordnet ist, dass er das hintere Zahnrad (24) daran hindert, schneller zu drehen als das hintere Rad (72), wenn sich die Tretlagerwelle (2) in die normale Tretrichtung dreht, die einer Bewegung des Tretfahrzeugs nach vorne entspricht.

11. Antriebssystem (1) nach einem der vorstehenden Ansprüche, wobei das erste Antriebselement ein Hohlrad (9) des Planetengetriebes ist und das Abtriebselement ein Planetenträger (6) des Planetengetriebes ist.

12. Antriebssystem (1) nach einem der Ansprüche 1 bis 10, wobei das erste Antriebselement ein Planetenträger (6) des Planetengetriebes ist und das Abtriebselement ein Hohlrad (9) des Planetengetriebes ist.

13. Antriebssystem (1) nach einem der vorstehenden Ansprüche, wobei der erste Motor (40) mit dem Sonnenrad einstückig ist.

14. Tretfahrzeug, umfassend ein Antriebssystem (1) nach einem der vorstehenden Ansprüche, einen Rahmen (80) und ein hinteres Rad (72).

15. Tretfahrzeug nach dem vorstehenden Anspruch, wobei die mechanische Verbindung zwischen dem hinteren Rad (72) und dem Antriebsstrang (1a) nur durch eine einzige Seite des hinteren Rads (72) passiert und das Antriebssystem (1) umfasst.

## Claims

1. A propulsion system (1) for a pedal vehicle and comprising:
- a first deformable transmission element (23) arranged to drive a rear wheel (72) of the pedal vehicle;
- a powertrain (1a) comprising:
• a crankset axle (2) arranged to rotate about a first axis of rotation (30),
• a main output plate (3) arranged to drive the first deformable transmission element (23),
• a first motor (40),
• a second motor (50),
• an epicyclic gear train comprising a first input element, an output element and a sun (5),
the crankset axle (2) and the second motor (50) being connected to the epicyclic gear train via the first input element so as to form a first input of the epicyclic gear train,
the first motor (40) being connected to the epicyclic gear train via the sun (5) so as to form a second input of the epicyclic gear train,
the output element connecting the epicyclic gear train to the main output plate (3) so as to form an output of the epicyclic gear train, and
the first deformable transmission element (23) being arranged to transmit power between the powertrain and the rear wheel (72) of the pedal vehicle; and
- a casing assembly (19);
- a rear sprocket (24);
- the main output plate (3), the first input element, the output element and the sun (5) being arranged so as to rotate about a same second axis of rotation (31) different from the first axis of rotation (30); **characterised in that**:
- the powertrain (1a) comprises:
• a secondary output plate (4) arranged to rotate about the first axis of rotation (30) and meshed to the first deformable transmission element (23),
• a speed reduction system maintaining the direction of rotation for transmitting a rotation between the crankset axle (2) and the first input element; and
- the first deformable transmission element (23), a portion of the crankset axle (2), the main output plate (3), the first motor (40), the second motor (50), the epicyclic gear train, the secondary output plate (4), and the rear sprocket (24) are within the casing assembly (19).

2. The propulsion system (1) according to claim 1, further comprising a tensioning roller (22) arranged to tension the first deformable transmission element (23).

3. The propulsion system (1) according to any one of the preceding claims, wherein the casing assembly comprises a transmission casing (19a) which encloses the first deformable transmission element (23), the transmission casing (19a) being arranged to be located on one side only of the rear wheel (72).

4. The propulsion system (1) according to any one of the preceding claims, wherein the casing assembly (19) is arranged to ensure alone the mechanical attachment between the rear wheel (72) and a frame (80) of the pedal vehicle.

5. The propulsion system (1) according to any one of the preceding claims, wherein the second motor (50) is connected to the first input element of the epicyclic gear train via a third deformable transmission element (61).

6. The propulsion system (1) according to any of the preceding claims, further comprising a rear sensor arranged to measure the speed of the rear wheel and located within the casing assembly (19).

7. The propulsion system (1) according to any one of the preceding claims, wherein the main output plate (3) is integral with the output element.

8. The propulsion system (1) according to any one of the preceding claims, further comprising a first freewheel (16) arranged to prevent the secondary output plate (4) from rotating slower than the crankset axle (2) when the crankset axle (2) rotates in the normal pedalling direction.

9. The propulsion system (1) according to any one of the preceding claims, wherein the powertrain (1a) further comprises a second freewheel (17) arranged to prevent a drive of the crankset axle (2) by the second motor (50) in a rotational direction corresponding to a forward motion of the pedal vehicle.

10. The propulsion system (1) according to any one of claims 1 to 8, wherein the powertrain (1a) further comprises a rear wheel freewheel (65) arranged to prevent the rear sprocket (24) from rotating faster than the rear wheel (72) when the crankset axle (2) rotates in the normal pedalling direction which corresponds to a forward motion of the pedal vehicle.

11. The propulsion system (1) according to any one of the preceding claims, wherein the first input element is a ring gear (9) of the epicyclic gear train and the output element is a planet carrier (6) of the epicyclic gear train.

12. The propulsion system (1) according to any one of claims 1 to 10, wherein the first input element is a planet carrier (6) of the epicyclic gear train and the output element is a ring gear (9) of the epicyclic gear train.

13. The propulsion system (1) according to any of the preceding claims, wherein the first motor (40) is integral with the sun.

14. A pedal vehicle comprising a propulsion system (1) according to any of the preceding claims, a frame (80), and a rear wheel (72).

15. The pedal vehicle according to the preceding claim, wherein the mechanical connection between the rear wheel (72) and the powertrain (1a) passes through only one side of the rear wheel (72) and comprises the propulsion system (1).
